# EUROPEAN PATENT APPLICATION

(11) **EP 2 763 212 A1**
(43) Date of publication of application: **06.08.2014**
(21) Application number: 14151626.0
(22) Date of filing: 17.01.2014
(51) Int. Cl.: H01M 2/20, H01M 2/34, H01M 10/42

(54) **Battery pack**

(30) Priority: 30.01.2013 KR 20130010720
(71) Applicant: Samsung SDI Co., Ltd., Yongin-si, Gyeonggi-do (KR)
(72) Inventor: Moon, Dae-Yon, Gyeonggi-do (KR); Wang, Han-Jun, Gyeonggi-do (KR)
(74) Representative: Walaski, Jan Filip

(57) **Abstract**

Provided is a battery pack including unit batteries arranged side-by-side, a substrate for electrically connecting the unit batteries to each other, a metal layer formed on a first side of the substrate and a protection circuit module that is electrically connected to the substrate, wherein the substrate comprises an area reduction portion of which an area is partially reduced with respect to the rest of the substrate, and the metal layer is formed to correspond to the area reduction portion.

## Description

The present invention relates to a battery pack.

Unlike a primary battery that cannot be recharged, a secondary battery is a rechargeable battery that is widely used in various technical fields. For example, secondary batteries are used with energy storage systems as well as with small electronic devices such as mobile phones, personal digital assistants (PDAs), and notebook computers.

A secondary battery is used as a single battery or as a battery pack in which a plurality of batteries are electrically connected to each other, depending on the type of external electronic device using the secondary battery. For example, a small device such as a mobile phone can be operated for a predetermined time with a single battery, whereas a medium-sized or large device such as a notebook computer, a portable digital versatile disk (DVD), or a personal computer (PC) needs to use a plurality of batteries.

A battery pack in which a protection circuit is connected to a plurality of batteries connected in series and/or in parallel may be used in the medium-sized or large device. With a battery pack in which a plurality batteries are electrically connected to each other, the battery pack may provide a sufficient output and capacity only when an electrical connection between the plurality of batteries remains stable.

One or more embodiments of the present invention include a battery pack in which an electrical connection between a plurality of batteries remains stable.

Additional aspects will be set forth in part in the description which follows and, in part, will be apparent from the description, or may be learned by practice of the presented embodiments.

According to one or more embodiments of the present invention, a battery pack includes: unit batteries arranged side-by-side; a substrate for electrically connecting the unit batteries to each other; a metal layer formed on a first side of the substrate and a protection circuit module electrically connected to the substrate, wherein the substrate includes an area reduction portion of which an area is partially reduced, and the metal layer is formed to correspond to the area reduction portion.

The area reduction portion may include a concave portion formed in one side of the substrate.

The battery pack may further include a lead for electrically connecting the substrate to the protection circuit module, wherein the lead is positioned in the concave portion.

The lead may be vertically bent, the substrate may be disposed to be opposite to first sides of the unit batteries, and the protection circuit module may be disposed adjacent to second sides of the unit batteries.

The area reduction portion may include a first hole formed in the substrate.

A second hole corresponding to the first hole may be formed in the metal layer.

A temperature protection device may be disposed on a second side of the substrate, which is opposite to the first side of the substrate, and the metal layer may be formed in a position where the metal layer overlaps the temperature protection device.

The battery pack may further include a heat absorption plate positioned between the substrate and the temperature protection device.

A heat radiation hole may be formed in a portion of the substrate, in which the temperature protection device is positioned.

The substrate may be a printed circuit board.

The battery pack may further include a tab for electrically connecting the unit batteries to the substrate, wherein the tab is bent so that one side of the tab, which is connected to the substrate, and the other side of the tab, which is connected to the unit batteries, are parallel.

According to one or more embodiments of the present invention, a battery pack includes: unit batteries arranged side-by-side; a substrate for electrically connecting the unit batteries to each other; a metal layer formed on a first side of the substrate; a tab that is connected to the unit batteries and the substrate so as to electrically connect the unit batteries to the substrate and is bent so that the substrate is disposed parallel to first sides of the unit batteries, one side of the tab being welded to the substrate and the other side of the tab being welded to the first sides of the unit batteries; a protection circuit module that is electrically connected to the substrate; and a lead that electrically connects the substrate to the protection circuit module and is bent so that the protection circuit module is disposed adjacent to second sides of the unit batteries, one side of the lead being welded to the protection circuit module and the other side of the lead being welded to the substrate, wherein the substrate includes an area reduction portion of which an area is partially reduced, and the metal layer is formed to correspond to the area reduction portion.

The area reduction portion may include a concave portion formed in one side of the substrate.

The lead may be positioned in the concave portion.

The area reduction portion may include a first hole formed in the substrate.

A second hole corresponding to the first hole may be formed in the metal layer.

A temperature protection device may be disposed on a second side of the substrate, which is opposite to the first side of the substrate, and the first hole and the second hole may be welding holes for welding the temperature protection device and the tab.

The metal layer may be formed at a position where the metal layer overlaps the temperature protection device.

The battery pack may further include a heat absorption plate positioned between the substrate and the temperature protection device, and a heat radiation hole may be formed in a portion of the substrate, in which the temperature protection device is positioned.

The tab and the lead each may include a notch formed in a width direction thereof.

The substrate may be a printed circuit board on which a circuit pattern is printed, and the metal layer may be electrically connected to the circuit pattern.

The first sides of the unit batteries may be upper sides of the unit batteries, each on which an anode and a cathode of each unit battery are formed, and the second sides of the unit batteries may be front sides or rear sides of the unit batteries.

These and/or other aspects will become apparent and more readily appreciated from the following description of the embodiments, taken in conjunction with the accompanying drawings in which:
FIG. 1 is a schematic perspective view of a battery pack according to an embodiment of the present invention;
FIG. 2 is an exploded perspective view in which in the battery pack of FIG. 1, a substrate and a protection circuit module are separated from a plurality of unit batteries;
FIG. 3 is a cross-sectional view taken along line X-X of FIG. 2; and
FIG. 4 is a perspective view of the substrate.

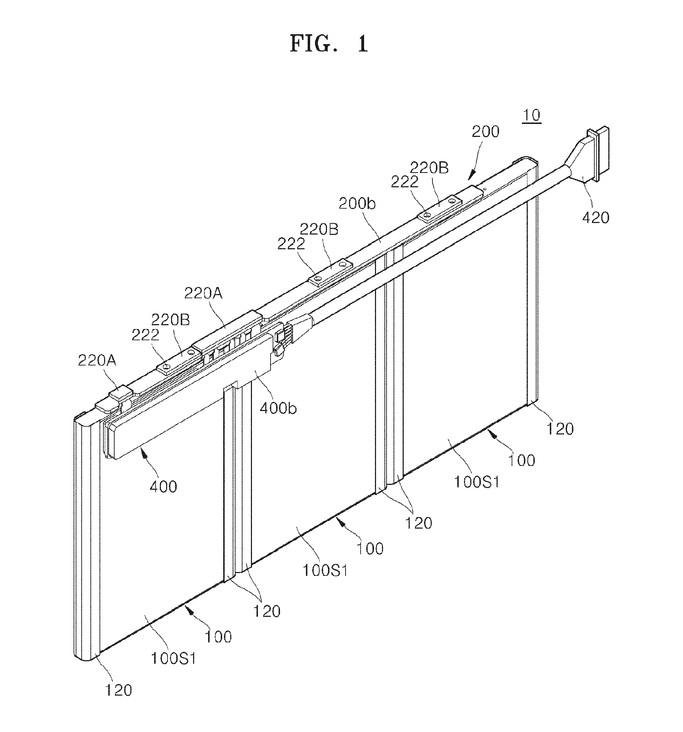

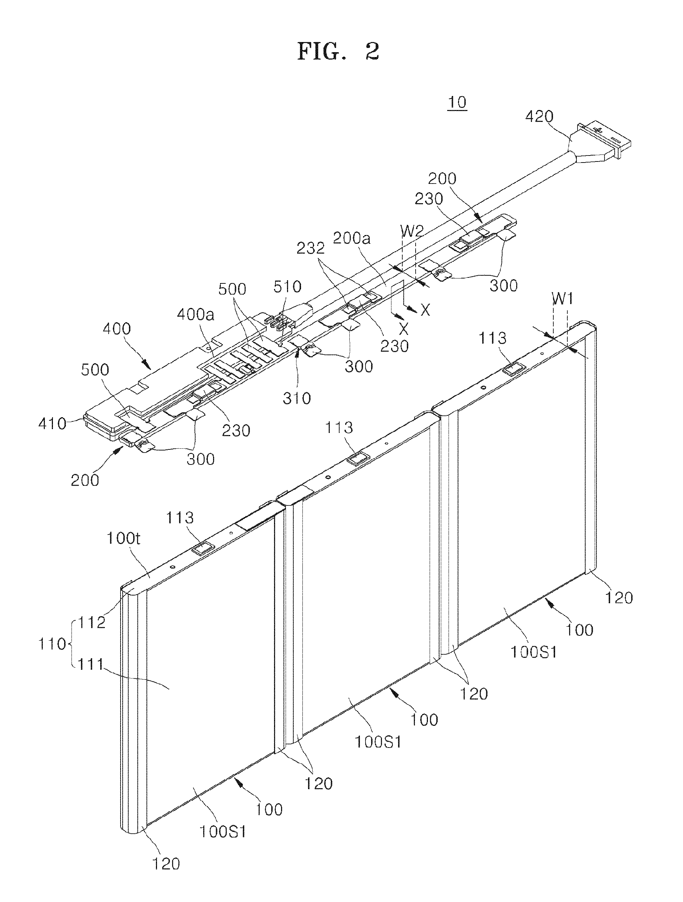

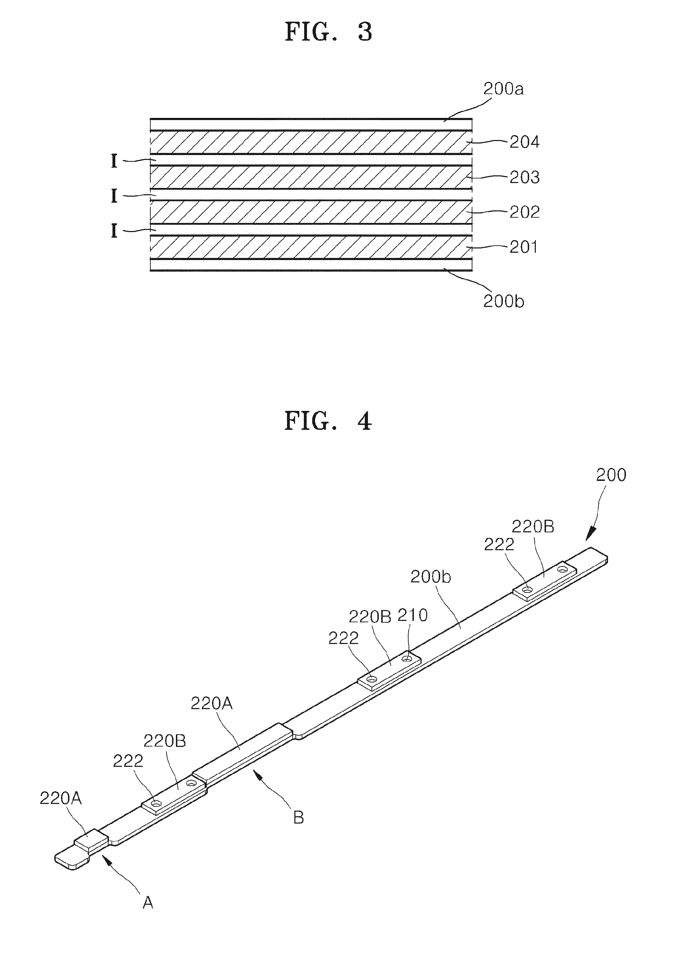

FIG. 1 is a schematic perspective view of a battery pack 10 according to an embodiment of the present invention. FIG. 2 is an exploded perspective view in which, in the battery pack 100 of FIG. 1, a substrate 200 for connection and a protection circuit module 400 are separated from a plurality of unit batteries 100. FIG. 3 is a cross-sectional view taken along line X-X of FIG. 2. FIG. 4 is a perspective view of the substrate 200 for connection.

Referring to FIGS. 1 to 3, the battery pack 10 includes the plurality of unit batteries 100, the substrate 200 for connecting the plurality of unit batteries 100 to each other, and the protection circuit module 400 that is electrically connected to the substrate 200.

The plurality of unit batteries 100 may be lithium-ion batteries as rechargeable secondary batteries. Each of the plurality of unit batteries 100 may include an electrode assembly and a can 110 that accommodates the electrode assembly and an electrolyte.

The electrode assembly may be manufactured by stacking a positive plate, a negative plate, and a separator interposed therebetween and then wrapping the stacked structure in a form of a jelly roll.

The electrode assembly is accommodated inside the can 110. To this end, the can 110 may include a body 111 whose upper side is open and a cap plate 112 closing the opened upper side of the body 111. When the electrode assembly is accommodated inside the body 111 through an opening, the opening is sealed by the cap plate 112. The cap plate 112 may be coupled to the body 111 by welding. The electrolyte may be injected in the can 110 through an inlet (not shown) formed in the cap plate 112 after the cap plate 112 is welded to the body 111.

The can 110 may be made of a metal material, e.g., aluminum or aluminum alloy, to maintain the strength thereof, and may have the shape of a rectangular parallelepiped. Thus, the plurality of unit batteries 100 may be square-shaped unit batteries and may be arranged side-by-side in one direction.

Since the can 110 is formed of a metal material, both sides of each of the unit batteries 100 may be covered with an insulating material such as an insulating tape to prevent a short between the unit batteries 100 arranged side-by-side.

The anode and cathode of each of the unit batteries 100 may be formed on the upper side of each of the unit batteries 100, that is, on the cap plate 112. For example, a negative plate of the electrode assembly may be electrically connected to an electrode terminal 113 placed on the cap plate 112 and a positive plate of the electrode assembly may be electrically connected to the cap plate 112, and thus, the electrode terminal 113 may form the cathode of each of the unit batteries 100 and the cap plate 112 may form the anode of each of the unit batteries 100. However, the present invention is not limited thereto and the electrode terminal 113 may form the anode, and the cap plate 112 may form the cathode.

The substrate 200 may be electrically connected to the plurality of unit batteries 100.

The substrate 200 may be a printed circuit board (PCB) on which a circuit pattern is printed.

FIG. 3 is a cross-sectional view taken along line X-X of FIG. 2, and shows an example configuration of the substrate 200. Referring to FIG. 3, the substrate 200 may include first through fourth metal layers 201, 202, 203, and 204 and insulating layers I interposed between the first to fourth metal layers 201, 202, 203, and 204. Also, a first side 200b and a second side 200a of the substrate 200 may be insulating layers. In FIG. 3, it is depicted that the substrate 200 includes the first through fourth metal layers 201, 202, 203 and 204, but the substrate 200 according to the current embodiment is not limited thereto.

The first to fourth metal layers 201, 202, 203 and 204 may be formed of copper having a high conductivity and respectively may include a circuit pattern. The first to fourth metal layers 201, 202, 203 and 204 may be electrically connected to each other through via holes and thus the unit cells 100 may connect to each other in parallel, series, or parallel and series.

Accordingly, although the battery pack 10 according to the current embodiment does not include an additional metal plate for electrically connecting the unit cells 100, short circuits that may occur between the metal plates may be prevented.

The substrate 200 may be electrically connected to the unit batteries 100 through tabs 300. In more detail, one side of each of the tabs 300 may be connected to the substrate 200, and the other side of each of the tabs 300 may be connected to the cathode and/or anode of each of the unit batteries 100. The tabs 300 may be electrically connected to the substrate 200 and the unit batteries 100 by welding, such as laser welding or ultrasonic welding.

The tabs 300 may be bent or folded over so that one side of each of the tabs 300, which is connected to the substrate 200, and the other side of each of the tabs 300, which is connected to the unit batteries 100, are parallel.

In this case, in order to facilitate the bending of the tabs 300, each of the tabs 300 may include a notch 310 formed in a width direction of each of the tabs 300. The notch 310 may be formed at both sides of each tab 300 in the width direction of each of the tabs 300, and thus, a bending area with the notch 310 may have a width that is smaller than that of a non-bending area.

Through the bending of the tabs 300, the substrate 200 may be disposed on first sides 100t of the unit batteries 100. The first sides 100t of the unit batteries 100 may be the upper sides of the unit batteries 100.

The width w2 of the substrate 200 may be substantially the same as the widths w1 of the first sides 100t of the unit batteries 100. Thus, by minimizing a space which the substrate 200 occupies, the battery pack 10 may have a compact structure while maximizing the utilization of space.

In addition, the substrate 200 may include an area reduction portion of which an area is partially reduced, and metal layers 220A and 220B may be formed on a first side 200b of the substrate 200. The first side 200b of the substrate 200 indicates a side exposed to the outside when the substrate 200 is positioned on the first sides 100t of the unit batteries 100.

The area reduction portion is a portion in which the width of the substrate 200 is reduced relative to other portions of the substrate. The area reduction portion includes concave portions A and B formed at one side of the substrate 200 or includes a first hole 210 formed in the substrate 200.

The concave portions A and B may include an area in which a lead 500 to be described below is positioned. The lead 500 may be bent like the tabs 300, and may be easily bent as the concave portions A and B are formed in a portion where the lead 500 is bent. In addition, since the portion where the lead 500 is bent may be positioned closer to the substrate 200 than elsewhere as an interval between the protection circuit module 400 and second sides 100S1 of the unit batteries 100 may be reduced, and thus, the battery pack 10 may have a compact structure.

A second side 200a of the substrate 200, which is opposite to a first side 200b of the substrate 200, may be disposed adjacent to the first sides 100t of the unit batteries 100, and a temperature protection device 230 may be disposed on the second side 200a of the substrate 200.

The temperature protection device 230 may include a temperature cutoff (TCO) element. The temperature protection device 230 may function as a fuse for blocking a current when the temperature of the unit batteries 100 exceeds a reference value.

In addition, since the second side 200a of the substrate 200 is disposed adjacent to the first sides 100t of the unit batteries 100, the temperature protection device 230 may sensitively respond to a temperature change of the unit batteries 100, thereby improving the efficiency of temperature management of the unit batteries 100.

The temperature protection device 230 may be connected to the tabs 300 by welding. To this end, the first hole 210, i.e., a welding hole into which a welding rod may be inserted, may be formed in the substrate 200. More specifically, the metal portion of a side of the temperature protection device 230 is electrically combined with one of the tabs 300 that is connected to an electrode terminal 113 of the unit cell 100 by welding, and the other metal portion 232 may be electrically combined with (connected to) the other one of the tabs 300 that forms a current path together with the protection circuit module 400.

As described above, when the concave portions A and B and/or the first hole 210 are formed in the substrate 200, the width of the substrate 200 is reduced in a portion where the concave portions A and B and/or the first hole 210 are formed.

The width of a high current circuit pattern in which high current flows formed in the substrate 200 is relatively reduced in the area reduction portion, and due to this, the resistance of the high current circuit pattern may increase. According to the present invention, a resistance increased due to the area reduction portion may be compensated for by forming the metal layers 220A and 220B corresponding to the area reduction portion on the first side 200b of the substrate 200. The metal layers 220A and 220B may be connected to the high current circuit pattern by via holes.

The metal layers 220A and 220B may be formed of a highly conductive material such as silver, copper, aluminum, or the like. The metal layers 220A and 220B are electrically connected to the high current circuit pattern and are used as a current path, thereby reducing the total resistance of the high current circuit pattern. Thus, an electrical connection between the unit batteries 100 may be stably implemented.

In addition, a second hole 222 corresponding to the first hole 210 may be formed in the metal layer 220B formed in a portion in which the first hole 210 is formed. The metal layer 220B on the first side 200b may be located at a position where the metal layer 220B overlaps the temperature protection device 230 formed on the second side 200a.

The second hole 222 is a welding hole for welding the temperature protection device 230 as well as the first hole 210, and a welding rod may be inserted into the second hole 222. Thus, since heat that is generated during welding may be easily diffused to the outside through the metal layer 220B, it is possible to prevent the temperature protection device 230 from being damaged due to heat that is generated during welding.

Though not illustrated, a heat absorption plate that touches the substrate 200 may be positioned in the temperature protection device 230. The heat absorption plate prevents the temperature protection device 230 from being damaged due to heat. A plurality of heat radiation holes (not shown) may be formed in a portion of the substrate 200, in which the temperature protection device 230 is positioned. When the metal layer 220B is formed in a position where the metal layer 220B overlaps the temperature protection device 230, the metal layer 220B may easily diffuse the heat of the heat radiation holes and the temperature protection device 230 to the outside.

The protection circuit module 400 may be electrically connected to the plurality of unit batteries 100 via the substrate 200, and thus may prevent overheating and an explosion due to the overcharge, overdischarge, or overcurrent of the unit batteries 100.

The protection circuit module 400 may include a substrate 410 and a protection device (not shown) that is formed at one side of the substrate 410 or inside the substrate 410. The protection device may be formed of a safety device that is comprised of a passive element such as a resistor and a capacitor or an active element such as a field transistor, or may be formed of integrated circuits.

A connector 420 for supplying power to an external electronic device may be disposed at one side of the protection circuit module 400.

The protection circuit module 400 is electrically connected to the substrate 200 by the lead 500. In more detail, one side of the lead 500 may be connected to the protection circuit module 400, and the other side of the lead 500 may be connected to the substrate 200. The lead 500 may be connected to the protection circuit module 400 and the substrate 200 by welding.

The lead 500 disposed on a first side 400a of the protection circuit module 400 and the second side 200a of the substrate 200 is bent so that the protection circuit module 400 is disposed parallel to second sides 100S1 of the unit batteries 100. The second sides 100S1 of the unit batteries 100 may be the front sides or rear sides of the unit batteries 100.

That is, since the lead 500 is bent so that one side of the lead 500, which is directly connected to the protection circuit module 400, is perpendicular to the other side of the lead 500, which is directly connected to the substrate 200, the substrate 200 may be disposed to be opposite to the first sides 100t of the unit batteries 100, and the protection circuit module 400 may be disposed adjacent to the second sides 100S1 of the unit batteries 100. In this case, in order to facilitate the bending of the lead 500, the lead 500 may include a notch 510 formed in a width direction of the lead 500. The notch 510 may be formed at both sides of the lead 500 in the width direction of the lead 500, and thus, a bending area with the notch 510 may have a width that is smaller than that of a non-bending area.

As described above, as the lead 500 is positioned in the concave portions A and B formed in the substrate 200, a bent portion of the lead 500 may be positioned closer to the substrate 200 than else where. Thus, by minimizing a space which the protection circuit module 400 occupies in the battery pack 10, the battery pack 10 may have a more compact structure.

As described above, according to the above embodiment of the present invention, by forming a metal layer on a substrate, the reduction of the resistance of the substrate may be prevented, and thus, an electrical connection between unit batteries may remain stable.

In addition, by disposing the substrate and a protection circuit module to be adjacent to the unit batteries by using bent tabs and leads, a battery pack that is compact by maximizing the utilization of space of the battery pack may be provided.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A battery pack comprising:
unit batteries arranged side-by-side;
a substrate (200) for electrically connecting the unit batteries to each other;
a metal layer (220A, 220B) formed on a first side (200b) of the substrate; and
a protection circuit module (400) electrically connected to the substrate,
wherein the substrate comprises an area reduction portion and the metal layer is formed to correspond to the area reduction portion.

2. The battery pack of claim 1, wherein the area reduction portion comprises a concave portion formed in one side of the substrate.

3. The battery pack of claim 2, further comprising a lead for electrically connecting the substrate to the protection circuit module, wherein the lead is positioned in the concave portion.

4. The battery pack of claim 3, wherein the lead is vertically bent, the substrate is disposed to be opposite to first sides of the unit batteries, and the protection circuit module is disposed adjacent to second sides of the unit batteries.

5. The battery pack of claim 1, wherein the area reduction portion comprises a first hole formed in the substrate.

6. The battery pack of claim 5, wherein a second hole corresponding to the first hole is formed in the metal layer.

7. The battery pack of claim 6, wherein a temperature protection device is disposed on a second side (200a) of the substrate, which is opposite to the first side of the substrate, and the metal layer is formed in a position where the metal layer overlaps the temperature protection device.

8. The battery pack of claim 7, wherein the first hole is a welding hole for welding the temperature protection device.

9. The battery pack of claim 7 or 8, further comprising a heat absorption plate positioned between the substrate and the temperature protection device.

10. The battery pack of claim 9, wherein a heat radiation hole is formed in a portion of the substrate, in which the temperature protection device is positioned.

11. The battery pack of any one of the preceding claims, wherein the substrate is a multi-layer printed circuit board.

12. The battery pack of any one of the preceding claims, further comprising a tab for electrically connecting the unit batteries to the substrate, wherein the tab is bent so that one side of the tab, which is connected to the substrate, and the other side of the tab, which is connected to the unit batteries, are parallel.

13. The battery pack of claim 12, when dependent on claim 2, wherein the tab and the lead each comprise a notch formed in a width direction thereof.
